## Europäisches Patentamt
## European Patent Office
## Office européen des brevets

(19)

(11) Veröffentlichungsnummer: **0 058 921**
**B1**

(12) # EUROPÄISCHE PATENTSCHRIFT

(45) Veröffentlichungstag der Patentschrift:
**08.11.89**

(51) Int. Cl.⁴: **C 08 J 9/00**

(21) Anmeldenummer: **82101142.6**

(22) Anmeldetag: **16.02.82**

(54) Formmasse für mit Stärke gefüllte Polyurethanhartschäume.

(30) Priorität: **20.02.81 DE 3106246**

(43) Veröffentlichungstag der Anmeldung:
**01.09.82 Patentblatt 82/35**

(45) Bekanntmachung des Hinweises auf die Patenterteilung:
**08.11.89 Patentblatt 89/45**

(84) Benannte Vertragsstaaten:
**BE FR GB IT NL SE**

(56) Entgegenhaltungen:
**EP-A- 0 003 161**

**JOURNAL OF CELLULAR PLASTICS, Band 3, August 1967, Seiten 369-373, Westport. Conn. USA F. L. BENNETT et al.: "Rigid urethane foam extended with starch"** * Seite 369, linke Spalte, Absätze 2,3; rechte Spalte, Absatz 2 und Tafel 2;Seite 372, rechte Spalte, letzter Absatz *
**KUNSTSTOFFE, Band 71, Nr. 11, November 1981, Seiten 817-820, Munchen, De.rt. Conn. USA F. L. BENNETT et al.: "Rigid urethane foam extended with starch"** * Seite 369, linke Spalte, Absätze 2,3;

**Die Akte enthält technische Angaben, die nach dem Eingang der Anmeldung eingereicht wurden und die nicht in dieser Patentschrift enthalten sind.**

(73) Patentinhaber: **CPC INTERNATIONAL INC., International Plaza P.O. Box 8000, Englewood Cliffs New Jersey 07632 (US)**

(72) Erfinder: **Koch, Helmut, Dr. Dipl.-Chem., Havik 10, D-4190 Kleve-Rindern (DE)**
Erfinder: **Krause, Frank, Dr. Dipl.-Chem., Arnoldstrasse 17, D-4190 Kleve-Matterborn (DE)**

(74) Vertreter: **Deufel, Paul, Dr. et al, Patentanwälte Müller-Boré, Deufel, Schön, Hertel, Lewald, Otto Isartorplatz 6 Postfach 26 02 47, D-8000 München 26 (DE)**

## Beschreibung

Die Erfindung betrifft mit Stärke gefüllte Formmassen für Polyurethanhartschäume. Kunststoffen werden bekanntlich häufig Füllstoffe zugesetzt, wobei durch den Füllstoffzusatz in der Regel in erster Linie eine Kostensenkung unter möglichst weitgehendem Erhalt und/oder sogar einer Verbesserung erwünschter anwendungstechnischer Eigenschaften des Basiskunststoffs bezweckt wird.

Polyurethanhartschäume weisen eine Reihe hervorragender Eigenschaften auf und haben deshalb trotz ihres relativ hohen Preises verbreitete Anwendung gefunden. Selbstverständlich wurde auch schon versucht, sie durch Zusatz von Füllstoffen zu strecken bzw. zu verbilligen, wozu eine Reihe organischer und anorganischer Füllstoffe, unter anderem auch vorgetrocknete, feinstgemahlene körnige bzw. native Stärke empfohlen wurde (Rigid Urethane Foam Extended With Starch, Bennett-Otey-Mehltretter, J. Cellular Plastics, (1967), Seite 369ff; DOS 2 537 859).

Mit diesen bekannten Füllstoffen wird zwar durchwegs eine mehr oder weniger beachtliche Kostensenkung erreicht, die aber in der Regel mit einer drastischen Verschlechterung wichtiger anwendungstechnischer Eigenschaften erkauft werden muß.

Der Erfindung lag daher die Aufgabe zugrunde, Formmassen für Polyurethanhartschäume zur Verfügung zu stellen, die bei vergleichbar günstigem Preis bessere anwendungstechnische Eigenschaften als die bekannten gefüllten Polyurethanhartschäume aufweisen und diesen insbesondere bezüglich des E-Moduls, der Reißspannung, der Reißdehnung und/oder des Wärmeausdehnungsverhaltens überlegen sind.

Diese Aufgabe wird durch die erfindungsgemäß mit Stärke gefüllten Formmassen für Polyurethanhartschäume gelöst, welche dadurch gekennzeichnet sind, daß die Stärkefüllstoffkomponente, bezogen auf das Gesamtgewicht, 3 bis 40 Gew.-%, beträgt und zu mindestens 80% aus Quellstärke besteht, die im wesentlichen frei von Teilchen mit einem Durchmesser von mehr als 3 mm ist und einen Wassergehalt von höchstens 15 Gew.-% aufweist.

Die Erfindung beruht demgemäß auf der überraschenden Feststellung, daß man aus den vorstehend definierten Formmassen durch Aufschäumen und Aushärten in an sich bekannter Weise Polyurethanhartschäume erhält, die nicht nur einen außerordentlich geringen Aushärtschwund aufweisen, sondern sich sowohl im Vergleich zu entsprechenden ungefüllten als auch zu stattdessen mit körniger Stärke gefüllten Polyurethanhartschäumen durch erheblich bessere Wärmedehnungseigenschaften, d.h. niedrigere lineare Wärmedehnungskoeffizienten auszeichnen und den bekannten mit Stärke gefüllten Polyurethanhartschäumen in der Regel auch noch hinsichtlich einer oder mehrerer anderer anwendungstechnischer Eigenschaften überlegen sind.

Insbesondere ist bei den erfindungsgemäßen, anders als bei mit körniger Stärke gefüllten Polyurethanhartschäumen, keine oder zumindest nur eine erheblich geringere Verschlechterung der E-Modulwerte gegenüber einem entsprechenden ungefüllten Polyurethanhartschaum festzustellen. Das gleiche gilt sinngemäß bezüglich der Reißspannung und hinsichtlich der Reißdehnung. Hartschäume aus erfindungsgemäßen Formmassen besitzen häufig sogar bessere Eigenschaften als die entsprechenden ungefüllten Polyurethanhartschäume, während bei Zusatz entsprechender Mengen körniger Stärke als Füllstoff bzw. Streckmittel, wie festgestellt wurde, stets eine drastische Verschlechterung der Reißdehnung in Kauf genommen werden muß.

In der EP-A-3 161 wird ein Verfahren zur Herstellung von Polyurethanschäumen unter Einsatz von vorgelatinisierten Stärken beschrieben, bei denen es sich um sogenannte «stabilisierte Stärken» handelt, das heißt um Stärken, die entweder mit Stabilisatoren (Antioxidationsmitteln) versetzt oder bei denen die oxidierbaren oder oxidierten Stoffe entfernt wurden.

Als «Quellstärken» im Sinne der Erfindung kommen nicht nur sogenannte «Walzentrocknerstärken» in Betracht, sondern all jene, bei denen die natürliche Kornstruktur durch Hitzebehandlung feuchter Stärke zerstört worden ist, wozu auch extrudierte Stärken gehören. Quellstärken im Sinne der Erfindung sind also daran erkennbar, daß sie im wesentlichen frei von im polarisierten Licht ein Doppelbrechungskreuz zeigenden Körnern sind.

Hinsichtlich der Herkunft der Stärken kommen erfindungsgemäß sowohl Getreide- als auch Wurzelstärken sowie Mehle oder durch Faserpartikel verunreinigte Stärken in Betracht.

Die erfindungsgemäße innerhalb des Bereichs von 3 bis 40 Gew.-% eingesetzte Menge der Stärkefüllstoffkomponente richtet sich nach der Verarbeitbarkeit der für die Polyurethanschaumherstellung notwendigen Mischung aus Polyol, Stärke und Polyisocyanat. Bei sehr hohen Stärkegehalten steigt die Viskosität derart stark an, daß eine ausreichend homogene Mischung aus den drei Komponenten innerhalb der vorgegebenen Mischzeiten von wenigen Sekunden nicht mehr möglich ist. Außerdem tritt bei extrem hohen Stärkegehalten meist eine beachtliche Verschlechterung verschiedener anwendungstechnischer Eigenschaften auf, so daß die Wahl des Füllstoffgehalts im oberen Bereich regelmäßig einen Kompromiß zwischen den Mindestanforderungen hinsichtlich der anwendungstechnischen Eigenschaften, denen die Hartschäume im Hinblick auf ihre jeweilige bestimmungsgemäße Verwendung genügen müssen und einer möglichst weitgehenden Verbilligung darstellt.

Man kann erfindungsgemäß auch Stärken verwenden, die sowohl körnige als auch Quellstärken enthalten, wobei der Anteil an Quellstärke zumindest 80% betragen muß, damit deren positive Wirkung auf anwendungstechnische Eigenschaften des Polyurethanhartschaumes zur Geltung kommt. Liegen mehr als 90% Quellstärke vor, so sind kaum noch Unterschiede zu reiner Quellstärke zu erkennen.

Selbstverständlich gilt für die erfindungsgemäß zu verwendenden Füllstoffe die Regel, daß eine gleichmäßige Verteilung über den gesamten Polyurethanhartschaum die besten Ergebnisse liefert, woraus folgt, daß die Körnung nicht zu groß sein darf und daß sie möglichst einheitlich ist. Allerdings ist die Erfindung diesbezüglich insofern vorteilhaft, als Quellstärken selbst bei gegenüber granulärer Stärke relativ grober Körnung, d.h. 0,03–0,1 mm für «feine» Quellstärke und 0,1–0,5 mm für «grobe» Quellstärke und 0,01–0,025 mm für native granuläre Maisstärke bei gleichen Stärkegehalten dem stärkegefüllten Polyurethanhartschaum die besseren anwendungstechnischen Eigenschaften, wie sie z.B. durch den Elastizitätsmodul oder die Reißspannung charakterisiert werden, verleihen.

Der Wassergehalt von Stärkefüllstoffen für Polyurethanhartschäume beeinflußt sowohl deren Herstellbarkeit als auch deren Eigenschaften, wobei sich z.B. die hohen Wassergehalte nativer Stärken, die zwischen 12 und 18 Gew.-% liegen, besonders negativ auswirken. Dies äußert sich einerseits in hohen Ausgangsviskositäten der Stärke/Polyol-Mischungen, die die erforderliche homogene Vermischung mit dem Polyisocyanat nicht mehr ermöglicht und andererseits in einer Verschlechterung anwendungstechnischer Eigenschaften, wie sie z.B. durch die Biegebruchspannung oder den Elastizitätsmodul charakterisiert werden können.

Die erfindungsgemäß zu verwendenden Quellstärken sind auch diesbezüglich vorteilhaft, da sie selbst bei relativ hohen Wassergehalten von bis zu etwa 10 Gew.-% bezüglich Verarbeitbarkeit und der Eigenschaften der damit gefüllten Polyurethanhartschäume meist noch zu technisch brauchbaren Produkten führen und fallweise sogar noch höhere Wassergehalte geduldet werden können.

Eine wesentliche Verbesserung erreicht man durch Reduzierung des Wassergehaltes des Stärkefüllstoffes auf 6 Gew.-% oder niedriger, wobei sich 2 Gew.-% oder weniger als besonders vorteilhaft herausgestellt haben.

Zur Herstellung erfindungsgemäßer Formmassen können die Komponenten zwar grundsätzlich in beliebiger Reihenfolge miteinander vermischt werden, jedoch ist es in der Regel vorteilhaft, den Füllstoff zumindest teilweise zunächst mit dem Isocyanat und/oder – vorzugsweise – der Polyolkomponente zu vermischen.

Weiterhin sei darauf hingewiesen, daß die Formmassen der Erfindung zwar für Polyurethanharzschäume allgemein gut geeignet sind, ihre Vorteile aber insbesondere bei der Herstellung integraler Polyurethanhartschäume zum Tragen kommen.

Die Beispiele und Vergleichsversuche erläutern die Erfindung und deren Vorteile gegenüber dem Stand der Technik.

Beispiele

In den nun folgenden Beispielen und Vergleichsversuchen wurde die Stärke jeweils in ein Polyätherpolyol mit einer Hydroxylzahl von 500 mg KOH/g eingerührt. Weiterhin enthielt das Polyol aminische Reaktionskatalysatoren, 10 Gew.-% eines niedrig siedenden Halogenkohlenwasserstoffes als Treibmittel sowie 0,5 Gew.-% eines Schaumstabilisators auf Polyäthersiloxanbasis. Als Isocyanatkomponente wurde ein Polyphenylenpolymethylenpolyisocyanat verwendet. Das Gewichtsverhältnis von Polyol (ohne Zusatzstoffe) zu Polyisocyanat betrug 1:1,56. Nach dem Vermischen von Polyisocyanat und Polyolmischung wurde in eine auf 50 °C geheizte Form gefüllt, in der integraler Polyurethanhartschaum entstand.

Beispiel 1

Bei diesem Beispiel enthielt der Polyurethanhartschaum 20 Gew.-% Quellstärke, bezogen auf das Gesamtgewicht. Der Einfluß des Mahlgrades der Quellstärke auf den linearen Wärmeausdehnungskoeffizienten stellt sich wie folgt dar:

| Stärke-Mahlgrad (Wassergehalt <1%) | Linearer Wärmeausdehnungskoeffizient (1/°K) |
|---|---|
| 0,03–0,1 mm | $9 \cdot 10^{-6}$ |
| 0,1 –0,5 mm | $15 \cdot 10^{-6}$ |

Beispiel 2

Der Einfluß unterschiedlicher Feuchtigkeiten des verwendeten Quellstärkematerials auf die Endeigenschaften des Polyurethanhartschaumes wird hier am Beispiel der Reißspannung gezeigt. Der Stärkegehalt betrug 10 bzw. 25 Gew.-%, bezogen auf das Gesamtgewicht.

| Feuchtigkeitsgehalt der Stärke (Körnung 0,03–0,1 mm) | Reißspannung (N/mm²) 10 Gew.-% Stärke | 25 Gew.-% Stärke |
|---|---|---|
| <1% | 8,9 | 6,5 |
| 7% | 7,3 | 4,3 |

**Beispiel 3**

Hier wurde ein Polyurethanhartschaum mit 20 Gew.-% Stärkefüllstoff des Körnungsbereichs 0,03–0,1 mm hergestellt. Der Elastizitätsmodul und die Reißdehnung des Schaumstoffes stellen sich in Abhängigkeit vom Feuchtigkeitsgehalt der Stärke wie folgt dar:

| Feuchtigkeitsgehalt der Stärke | E-Modul (N/mm²) | Reißdehnung (%) |
|---|---|---|
| < 1% | 560 | 2,9 |
| 6,7% | 350 | 1,85 |

**Vergleichsversuch 1**

Es wurde ein Polyurethanhartschaum nach Beispiel 1–3 ohne Stärkefüllstoff hergestellt. Er hatte folgende Eigenschaften:

| Linearer Wärmeausdehnungs-koeffizient | $46 \cdot 10^{-6}/°K$ |
|---|---|
| Reißspannung | 10 N/mm² |
| Reißdehnung | 2,4% |
| E-Modul | 570 N/mm² |

**Vergleichsversuch 2**

Es wurden Polyurethanhartschäume nach Beispiel 1–3 unter Verwendung nativer granulärer Stärke mit einem Feuchtigkeitsgehalt von < 1% hergestellt. Sie hatten folgende Eigenschaften:

| Gew. % Stärke, bez. auf Gesamtgewicht | | |
|---|---|---|
| 10 | Reißspannung | 4,5 N/mm² |
| 25 | Reißspannung | 4,0 N/mm² |
| 20 | E-Modul | 370 N/mm² |
| 20 | Reißdehnung | 1,2% |
| 20 | Linearer Wärme-ausdehnungs-koeffizient | $24 \cdot 10^{-6}/°K$ |

**Patentansprüche**

1. Mit Stärke gefüllte Formmasse für Polyurethanhartschäume, dadurch gekennzeichnet, daß die Stärkefüllstoffkomponente, bezogen auf das Gesamtgewicht, 3 bis 40 Gew.-% beträgt und zu mindestens 80% aus Quellstärke besteht, die im wesentlichen frei von Teilchen mit einem Durchmesser von mehr als 3 mm ist und einen Wassergehalt von höchstens 15 Gew.-% aufweist.

2. Formmasse nach Anspruch 1, dadurch gekennzeichnet, daß sie 5 bis 30 und insbesondere 8 bis 25 Gew.-% Stärkefüllstoffkomponente enthält.

3. Formmasse nach Anspruch 1 oder 2, dadurch gekennzeichnet, daß die Stärkefüllstoffkomponente zu mehr als 90 Gew.-% aus Quellstärke besteht.

4. Formmasse nach einem der Ansprüche 1 bis 3, dadurch gekennzeichnet, daß die Quellstärke ein Sieb mit einer lichten Maschenweite von 0,5 mm zu mindestens 50, vorzugsweise mindestens 75 und insbesondere mindestens 95 Gew.-% passiert.

5. Formmasse nach einem der Ansprüche 1 bis 4, dadurch gekennzeichnet, daß der Wassergehalt der Quellstärke höchstens 10, vorzugsweise höchstens 6 und insbesondere nicht mehr als 2 Gew.-% beträgt.

**Claims**

1. Moulding material filled with starch for rigid polyurethane foams, characterised in that the starch filler component represents 3 to 40% of the total weight and at least 80% of it consists of gelatinized starch, which is substantially free of particles of a diameter exceeding 3 mm and has a maximum water content of 15% by weight.

2. Moulding material according to claim 1, characterised in that it comprises 5 to 30 and in particular 8 to 25% by weight of starch filler component.

3. Moulding material according to claim 1 or 2, characterised in that more than 90% of the starch filler component consists of gelatinized starch.

4. Moulding material according to one of claims 1 to 3, characterised in that at least 50, preferably at least 75 and in particular at least 95% by weight of the gelatinized starch passes through a sieve with an aperture width of 0.5 mm.

5. Moulding material according to one of claims 1 to 4, characterised in that the water content of the gelatinized starch represents at most 10, preferably at most 6 and in particular no more than 2% by weight.

**Revendications**

1. Matière à mouler contenant de l'amidon comme charge pour mousses rigides de polyuréthanne, caractérisée en ce que l'amidon utilisé comme charge atteint, par rapport au poids total, une proportion de 3 à 40% et est constitué à 80% au moins d'amidon pré-gélatinisé qui est principalement dépourvu de particules de diamètre supérieur à 3 mm et qui présente une teneur en eau au maximum égale à 15% en poids.

2. Matière à mouler suivant la revendication 1, caractérisée en ce qu'elle contient 5 à 30 et notamment 8 à 25% en poids de charge d'amidon.

3. Matière à mouler suivant la revendication 1 ou 2, caractérisée en ce que la charge d'amidon est constituée à plus de 90% en poids d'amidon pré-gélatinisé.

4. Matière à mouler suivant l'une des revendications 1 à 3, caractérisée en ce que l'amidon pré-gélatinisé traverse en proportion d'au moins 50% en poids, de préférence d'au moins 75% en poids et notamment d'au moins 95% en poids un tamis de 0,5 mm d'ouverture de maille.

5. Matière à mouler suivant l'une des revendications 1 à 4, caractérisée en ce que la teneur en eau de l'amidon pré-gélatinisé s'élève au maximum à 10% en poids, de préférence au maximum à 6% en poids, et ne dépasse pas notamment 2% en poids.